# EUROPEAN PATENT SPECIFICATION

(11) **EP 0 434 356 B1**
(45) Date of publication and mention of the grant of the patent: **03.04.1996**
(21) Application number: 90313816.2
(22) Date of filing: 18.12.1990
(51) Int. Cl.: H04N 9/79, H04N 9/82, H04N 9/83

(54) **Video tape recorders**
Videobandgerät
Enregistreur à bande vidéo

(30) Priority: 19.12.1989 JP 328914/89
(43) Date of publication of application: 26.06.1991
(73) Proprietor: SONY CORPORATION, Tokyo 141 (JP)
(72) Inventor: Miyake, Yoshitaka, c/o Patents Division, Shinagawa-ku Tokyo 141 (JP)
(74) Representative: Cotter, Ivan John

(56) References cited:
- EP-A- 0 066 252
- GB-A- 2 096 435
- US-A- 3 795 764
- US-A- 4 148 060
- PATENT ABSTRACTS OF JAPAN vol. 12, no. 474 (E-692)(3321) 12 December 1988 & JP-A-63 191 485

## Description

This invention relates to video tape recorders, and more particularly, but not exclusively, to 8-mm video tape recorders for recording and/or reproducing a stereo frequency modulated (FM) audio signal.

In 8-mm video tape recorders (VTRs), originally a stereo audio signal was recorded and reproduced in a digital fashion, and an FM audio signal was recorded and reproduced in a monaural fashion. More recently, however, it is required to record and reproduce an FM audio signal in stereo mode.

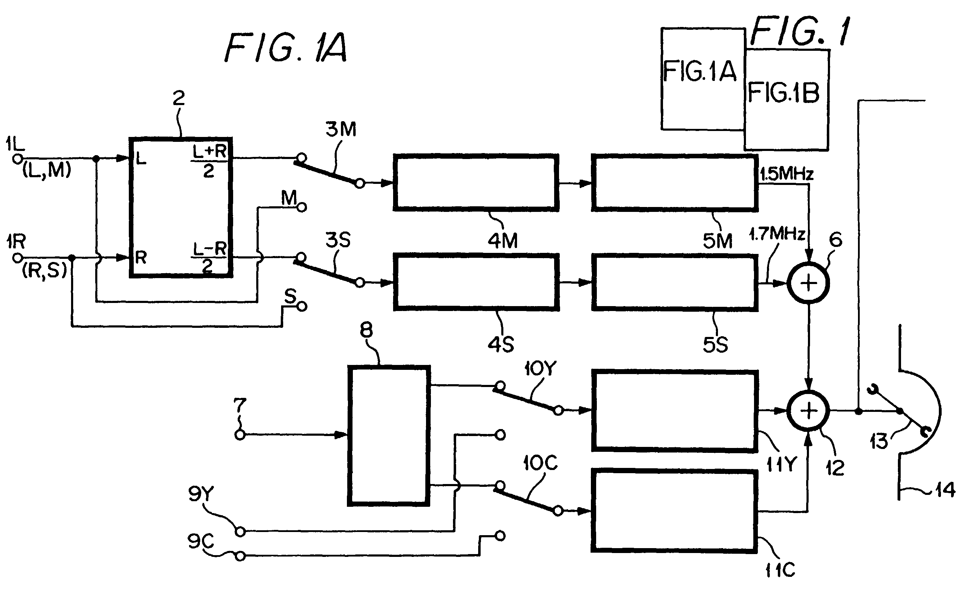

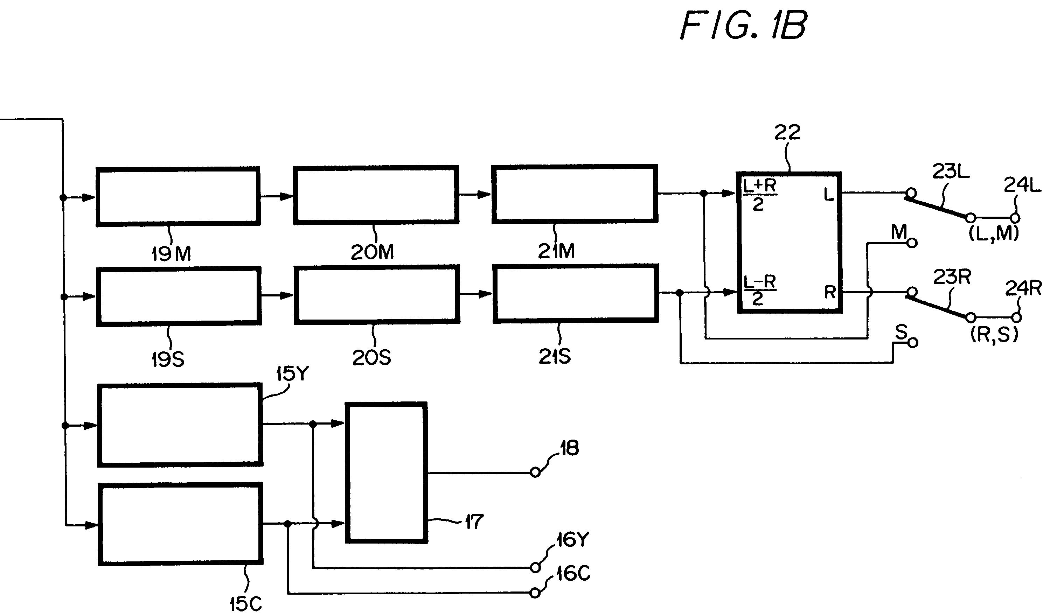

In an 8-mm VTR, an FM audio signal is made stereophonic as, for example, shown in Figure 1 (formed of Figures 1A and 1B). More specifically, stereophonic left and right audio signals L, R, or main and sub audio signals M, S are supplied to input terminals 1L and 1R, respectively. The left or main audio signal L or M is supplied to the input terminal 1L, and the right or sub audio signal R or S is supplied to the input terminal 1R.

Signals from the input terminals 1L and 1R are supplied to terminals L and R of a matrix circuit 2. Thus, from the matrix circuit 2, signals (L + R)/2 and (L - R)/2 are supplied to its respective terminals. The signal (L + R)/2 from the matrix circuit 2 and the main audio signal M from the input terminal 1L are selected by a switch 3M, and the signal (L - R)/2 from the matrix circuit 2, and the sub audio signal S are selected by a switch 3S. The signals selected by the switch 3M are supplied to a frequency modulator 5M through a noise cancelling encoder 4M, and modulated on a first carrier signal of 1.5 MHz. Also, the signals selected by the switch 3S are supplied to a frequency modulator 5S through a noise cancelling encoder 4S, and modulated on a second carrier signal of 1.7 MHz. These modulated signals are supplied to a mixer 6.

A composite video signal is supplied to an input terminal 7, and thence to a luminance/chroma signal (Y/C) separating circuit 8. The separated luminance signal and chroma signal are supplied to input terminals 9Y and 9C, respectively. The luminance signal Y separated by the separating circuit 8 and the luminance signal from the input terminal 9Y are selected by a switch 10Y, while the chroma signal separated by the separating circuit 8 and the chroma signal from the input terminal 9C are selected by a switch 10C. The signal selected by the switch 10Y is supplied to a luminance signal recording and processing circuit 11Y, and the signal selected by the switch 10C is supplied to a chroma signal recording and processing circuit 11C.

Then, the signals thus processed by the recording and processing circuits 11Y and 11C and the signal from the mixer 6 are mixed by a mixer 12. This mixed signal is supplied to a magnetic head 13 and recorded on a magnetic tape 14.

Reproduction is performed as follows. A signal recorded on the magnetic tape 14 is reproduced by the magnetic head 13. This reproduced signal is supplied to a luminance signal reproducing and processing circuit 15Y and a chroma signal reproducing and processing circuit 15C. A luminance signal Y and a chroma signal C, respectively processed thereby for reproduction, are supplied to output terminals 16Y and 16C, and are also supplied to a mixer 17. The mixed composite video signal therefrom is supplied to an output terminal 18.

The reproduced signal from the magnetic head 13 is supplied to a 1.5 MHz band-pass filter 19M which derives the signal components modulated on the first carrier signal of 1.5 MHz. The signal thus derived from the band-pass filter 19M is supplied to a frequency demodulator 20M, in which it is frequency demodulated to provide the above-mentioned signal (L + R)/2 or the main audio signal M. The demodulated signal is supplied to a noise cancelling decoder 21M.

Also, the reproduced signal from the magnetic head 13 is supplied to a 1.7 MHz band-pass filter 19S which then derives the signal component modulated on the second carrier signal of 1.7 MHz. The signal derived from the band-pass filter 19S is supplied to a frequency demodulator 20S, in which it is frequency demodulated to provide the above-mentioned signal (L - R)/2 or the sub audio signal 5. The demodulated signal is supplied to a noise cancelling decoder 21S.

The signals from the decoders 21M and 21S are supplied to respective terminals of a matrix circuit 22, in which the above-mentioned signals (L + R)/2 and (L - R)/2 are processed to provide left and right audio signals L and R which are then supplied to respective terminals for signals L and R.

The left audio signal L from the matrix circuit 22 and the main audio signal M from the decoder 21M are selected by a switch 23L and supplied to an output terminal 24L, and also the right audio signal R from the matrix circuit 22 and the sub audio signal S from the decoder 21S are selected by a switch 23R and supplied to an output terminal 24R.

Therefore, in the circuit of Figure 1, the audio signals supplied to the input terminal 1L and 1R are converted to so-called sum and difference signals in the case that they are stereophonic left and right audio signals L and R, where the sum signal is transmitted by the first carrier signal, while the difference signal is transmitted by the second carrier signal. On the other hand, when the main and sub audio signals M and S are supplied to the input terminals 1L and 1R, the main audio signal M is transmitted by the first carrier signal and the sub audio signal S is transmitted by the second carrier signal.

That is, in the FM audio signal recording of an 8-mm VTR, the second carrier signal is added to the indispensable first carrier signal. For this reason, to maintain compatibility with apparatus having only the first carrier signal, the sum signal and the main audio signal are transmitted by the first carrier signal while the difference signal and the sub-signal are transmitted by the second carrier signal, as described above.

Incidentally, in an 8-mm VTR, the frequency of the first carrier signal is 1.5 MHz with a maximum frequency deviation of ± 100 kHz, and the frequency of the second carrier signal is 1.7 MHz with a maximum frequency deviation of ± 50 kHz. Regarding a recording current, the second carrier signal is set to -2 ± 4 dB as compared with the first carrier signal.

In the above-mentioned 8-mm VTR, even if a video tape on which an FM audio signal is recorded in stereophonic mode is reproduced by a standard VTR exclusively used in the monaural mode, a reproduced signal can be obtained without trouble because the sum signal of the left and right audio signals is reproduced.

However, if a monaurally recorded video tape is reproduced by a VTR which can reproduce the audio signal in the stereophonic mode, high level noises are generally generated from the frequency demodulator 20S, and if these noises are supplied to the matrix circuit 22, resultant left and right audio signals are mixed with the noises of high levels, so that normal reproduction is not possible.

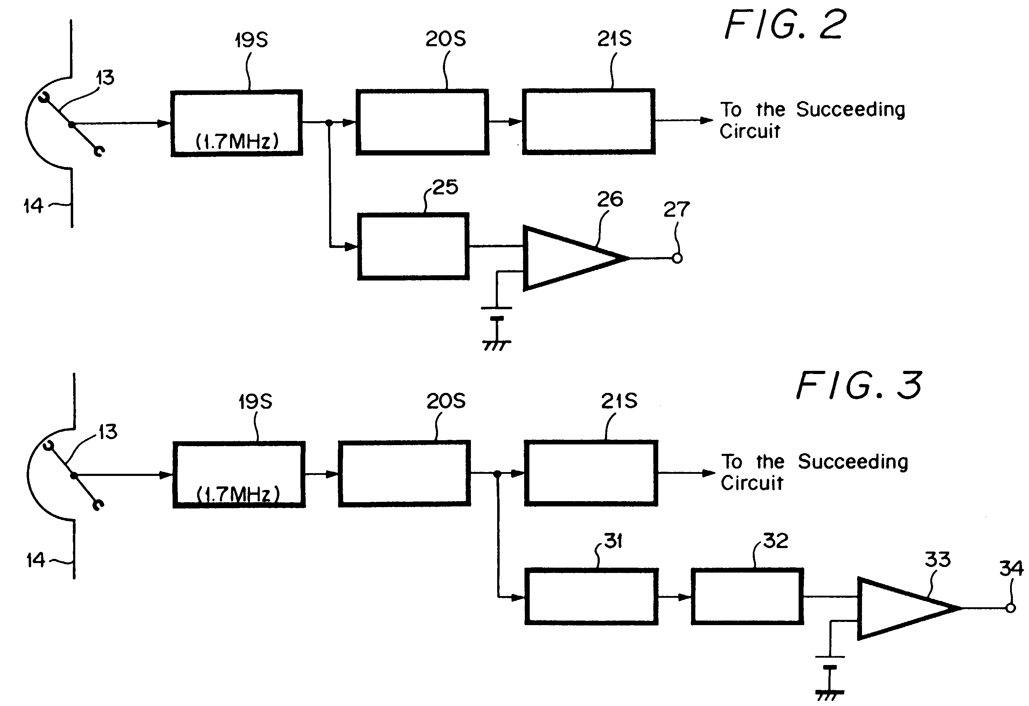

Therefore, usually, as for example shown in Figure 2, a filtered output from the 1.7 MHz band-pass filter 19S is supplied to a level detector 25, and this detected output is supplied to a comparator 26, wherein the presence of the second carrier signal is determined (a determined output is supplied to an output terminal 27) when the level of the filter output is above a predetermined value.

Such a circuit is disclosed in JP-A-63 191 485.

However, this method is easily affected by changes in the level of the reproduced signal from the magnetic head 13, and an erroneous decision may easily occur. Also, a malfunction may result due to disturbing waves. For example, if a lower side-band of the luminance signal Y, which is FM-recorded, existed in the vicinity of 1.7 MHz with a high level, there is then the risk that the presence of the second carrier signal would be determined regardless of the absence of the second carrier signal.

Previous carrier loss detection techniques for a video disc player are diclosed in GB-A-2 096 435.

According to the present invention there is provided a video tape recorder for recording and/or reproducing a frequency-modulated audio signal by a pair of carrier signals comprising a first carrier signal and a second carrier signal, the video tape recorder comprising:
demodulator means for demodulating said second carrier signal to provide a demodulated output; and
detector means for comparing an amplitude of said demodulated output with a predetermined value and detecting the existence of said second carrier signal in response to said comparison, said detector means comprising a filter means for removing a modulating frequency band and undesired components associated with said second carrier signal, and a level detector means for converting an output of said filter means into a DC voltage for comparison with said predetermined value, the existence of said second carrier signal being detected if said DC voltage is below said predetermined value.

Thus an embodiment of the present invention may provide a video tape recorder for recording and/or reproducing a stereo frequency-modulated audio signal by a pair of carrier signals comprising an indispensable first carrier signal and an additional second carrier signal, which comprises a circuit for demodulating the second carrier signal to provide a demodulated output, and a circuit for comparing an amplitude of the demodulated output with a predetermined value, wherein when the amplitude of the demodulated output is below the predetermined value, it is determined that the second carrier signal exists.

The invention will now be described by way of example with reference to the accompanying drawings, throughout which like parts are referred to by like references, and in which:
Figures 1 (formed of Figures 1A and 1B) is a block diagram showing an example of a signal system of an 8-mm VTR to which the present invention is applied;
Figure 2 is a schematic block diagram showing a previously proposed circuit arrangement; and
Figure 3 is a schematic block diagram showing an embodiment of VTR according to the present invention.

An embodiment of VTR according to the present invention will now be described with reference to Figure 3.

A demodulated output from the frequency demodulator 20S is supplied to a band-pass filter 31 of, for example 20KHz, and the filtered output of the band-pass filter 31 is supplied to a level detecting circuit 32. A level detected output from the level detecting circuit 32 is supplied to a comparator 33, and the compared output therefrom is supplied to an output terminal 34.

More particularly, in the above-mentioned 8-mm VTR, when the frequency demodulation is performed normally, the output from the frequency demodulator 20S to demodulate the second carrier signal has the following features:
(1) The frequency spectrum of the demodulated signal is limited within a demodulating frequency band (for example, lower than 20kHz); and
(2) The output amplitude is limited below a fixed value as follows:
   (signal component) + (undesired components associated with the carrier signal)
   where the signal components are limited below a maximum frequency deviation in the recording system.

The undesired components associated with the carrier signal are frequency components of twice the carrier frequency and so on and are below the fixed value which is determined depending on the circuits.

Accordingly, when these conditions are not satisfied, it may be determined that the second carrier signal does not exist.

Therefore, in the above-mentioned circuit, components within the modulating frequency band and the undesired components associated with the carrier signal are removed by the band-pass filter 31, and this filtered output is converted into a direct current voltage by a level detector 32. A level detected output is then compared with a reference voltage by the comparator 33 to determine that the second carrier signal exists when this voltage is below the reference voltage. The decided output can be supplied to the output terminal 34.

Thus, with this circuit, the amplitude of a frequency demodulated signal is detected to determine whether or not the second carrier signal exists so that the decision of the second carrier signal can be prevented from being affected by the changes in level of reproduced signals from the magnetic head, and malfunction due to an erroneous detection of disturbing waves can be satisfactorily prevented.

Incidentally, in the above-mentioned circuit, depending upon the characteristic of the 1.7 MHz band-pass filter 19S and the characteristic of the frequency demodulator 20S, even if the band-pass filter 31 is simplified by a high-pass filter and a trap circuit, it is possible sufficiently to take a level difference due to the presence or absence of the second carrier signal of the output amplitude from the frequency demodulator 20S.

As set out above, since the presence of the second carrier signal is determined by detecting the amplitude of the frequency demodulated signal, the decision of the second carrier signal can be prevented from being affected by the changes in level of the reproduced signal from the magnetic head, and malfunction due to the erroneous detection of the disturbing waves can be prevented.

## Claims

1. A video tape recorder for recording and/or reproducing a frequency-modulated audio signal by a pair of carrier signals comprising a first carrier signal and a second carrier signal, the video tape recorder comprising:
demodulator means (20S) for demodulating said second carrier signal to provide a demodulated output; and
detector means (31, 32, 33) for comparing an amplitude of said demodulated output with a predetermined value and detecting the existence of said second carrier signal in response to said comparison, said detector means (31, 32, 33) comprising a filter means (31) for removing a modulating frequency band and undesired components associated with said second carrier signal, and a level detector means (33) for converting an output of said filter means (31) into a DC voltage for comparison with said predetermined value, the existence of said second carrier signal being detected if said DC voltage is below said predetermined value.

2. A video tape recorder according to claim 1 further comprising a band-pass filter means (19) for passing signal components around said second carrier signal prior to said demodulator means (20S).

3. A video tape recorder according to claim 1 wherein said first carrier signal is modulated by an L + R signal and said second carrier signal is modulated by an L - R signal in which L is the left signal and R is the right signal of a stereo audio signal.

## Patentansprüche

1. Videobandrekorder zum Aufzeichnen und/oder Wiedergeben eines frequenzmodulierten Audiosignals durch ein Trägersignalpaar, das ein erstes Trägersignal und ein zweites Trägersignal umfaßt, wobei der Videobandrekorder aufweist:
eine Demodulatoreinrichtung (20S) zur Demodulierung des zweiten Trägersignals, um ein demoduliertes Ausgangssignal bereitzustellen; und
eine Detektoreinrichtung (31, 32, 33), um eine Amplitude des demodulierten Ausgangssignals mit einem vorgegebenen Wert zu vergleichen und das Vorhandensein des zweiten Trägersignals in Abhängigkeit von diesem Vergleich zu ermitteln, wobei die Detektoreinrichtung (31, 32, 33) eine Filtereinrichtung (31) aufweist, um ein Modulationsfrequenzband und unerwünschte Komponenten, die mit dem zweiten Trägersignal in Verbindung stehen, zu entfernen, und eine Pegelermittlungseinrichtung (33), um ein Ausgangssignal der Filtereinrichtung (31) in eine Gleichspannung umzuwandeln, um diese mit einem vorgegebenen Wert zu vergleichen, wobei das Vorhandensein des zweiten Trägersignals festgestellt wird, wenn die Gleichspannung unterhalb des vorgegebenen Werts liegt.

2. Videobandrekorder nach Anspruch 1, der außerdem eine Bandpaßfiltereinrichtung (19) aufweist, um vor der Demodulatoreinrichtung (20S) Signalkomponenten in der Nähe dieses zweiten Trägersignals durchzulassen.

3. Videobandrekorder nach Anspruch 1, wobei das erste Trägersignal durch ein (L+R) -Signal und zweite Trägersignal durch (L-R) -Signal moduliert wird, wobei L das linke Signal und R das rechte Signal eines Stereo-Audiosignals ist.

## Revendications

1. Magnétoscope pour enregistrer et/ou reproduire un signal audio modulant en fréquence une paire de fréquence porteuses comprenant une première fréquence porteuse et une deuxième fréquence porteuse, le magnétoscope comprenant:
- des moyens de démodulation (20S) pour démoduler ladite deuxième fréquence porteuse pour fournir un signal de sortie démodulé; et
- des moyens de détection (31, 32, 33) pour comparer l'amplitude dudit signal de sortie démodulé à une valeur prédéterminée et détecter la présence de ladite deuxième fréquence porteuse en réponse à ladite comparaison, lesdits moyens de détection (31, 32, 33) comprenant des moyens de filtrage (31) pour éliminer une bande de fréquences modulantes et des composantes indésirables associées à ladite deuxième fréquence porteuse, et des moyens de détection de niveau (33) pour convertir le signal de sortie desdits moyens de filtrage (31) en une tension continue pour comparaison à ladite valeur prédéterminée, la présence de ladite deuxième fréquence porteuse étant détectée si ladite tension continue est au-dessous de ladite valeur prédéterminée.

2. Magnétoscope selon la revendication 1, comprenant en outre des moyens de filtrage passe-bande (19) pour laisser passer les composantes de signal autour de ladite deuxième fréquence porteuse avant lesdits moyens de démodulation (20S).

3. Magnétoscope selon la revendication 1, dans lequel ladite première fréquence porteuse est modulée par un signal R+L et ladite deuxième fréquence porteuse est modulée par un signal R-L, dans lesquelles L est le signal gauche et R est le signal droit d'un signal audio stéréophonique.
